# EUROPEAN PATENT SPECIFICATION

(11) **EP 4 752 834 B1**
(45) Date of publication and mention of the grant of the patent: **14.10.2026**
(21) Application number: 24216549.6
(22) Date of filing: 29.11.2024
(51) Int. Cl.: G06T 7/246, G06T 7/277

(54) **PROCESS NOISE ADJUSTMENT IN OBJECT TRACKERS**
PROZESSRAUSCHEINSTELLUNG IN OBJEKTVERFOLGERN
RÉGLAGE DU BRUIT DE PROCESSUS DANS DES DISPOSITIFS DE SUIVI D'OBJETS

(43) Date of publication of application: 03.06.2026
(73) Proprietor: Axis AB, 223 69 Lund (SE)
(72) Inventor: Jönsson, Andreas, 223 69 LUND (SE); Hök, Jakob, 223 69 LUND (SE)
(74) Representative: AWA Sweden AB

(56) References cited:
- EP-A1- 4 300 422
- US-B1- 9 898 677
- AUGUSTE AMAURY: "Déploiement d'un système de suivi par vidéo et analyse comportementale : application à la surveillance urbaine", 4 January 2023 (2023-01-04), XP093275615, Retrieved from the Internet <URL:https://theses.hal.science/tel-03922664/>

## Description

### TECHNICAL FIELD

The present invention generally relates to the field of camera surveillance, and in particular to adjust a process noise of an object tracker in a camera.

### BACKGROUND

Object tracking in camera surveillance is often performed according to a tracking-by-detection principle. A detector model provides object detection predictions, typically including bounding boxes, object classes and classification confidence scores. The object detection prediction is sent to a tracker which decides if and what object detections should update which object tracks. Once a detection has been associated with a track, that track state is updated with the detection.

The track states can be modeled using a statistical motion filter where linear motion is assumed. Since objects in reality can move non-linearly, the model has to handle this in some way. One way to do this is to set the process noise of the filter to appropriate values. Process noise dictates how much the filter is allowed to deviate from its assumptions, in this case linear motion.

EP4300422A1 discloses object tracking using scene-, object- and location-specific tracking parameters.

However, setting the process noise is a non-trivial task, especially since a linear motion in the real-world can become a non-linear motion in the image plane of the camera. Thus, there is a need for improvement with regards to object tracking in cameras.

### SUMMARY

In view of above-mentioned and other drawbacks of the prior art, it is an object of the present invention to provide improvements with regards to adjusting a process noise of an object tracker in a camera.

According to a first aspect of the present invention, it is therefore provided a computer-implemented method to adjust a process noise of an object tracker in a camera configured to monitor a scene including moving objects, the object tracker uses a motion model associated with process noise, the method comprising: determining, using the object tracker, object tracks of moving objects travelling along a path in the scene for a time period using a level of process noise, evaluating at least one spatial parameter of the determined object tracks in relation to a predetermined criterion, repeating the steps of determining object tracks and evaluating at least one spatial parameter for object tracks during subsequent time periods using increased process noise for each iteration until the predetermined criterion is fulfilled or a maximum process noise limit is reached, and storing data indicating the final process noise.

The present invention is based upon the realization to adjust the process noise until one of a predetermined criterion related to a spatial parameter is fulfilled or a maximum process noise is reached. The adjustment in process noise is performed in an iterative manner to improve the tracking of the object for each iteration, wherein improving the tracking may relate to extending the track further each time the process noise is increased and avoid so-called ID-switches. The method is initiated at a relatively low process noise, whereby the at least one spatial parameter of the determined object track is evaluated in view of the predetermined criterion. If the criterion is fulfilled, the method is completed, or if the criterion is not fulfilled, the process noise is increased, and the evaluation is repeated for a subsequent time period. Preferably, the process noise is increased until the predetermined criterion is fulfilled. In some cases, however, a maximum process noise may be reached before the predetermined criterion is fulfilled.

The increase in process noise may be performed as a live calibration of process noise for an object tracker in camera at a scene. However, it is also envisaged that the process noise can be increased for a local part of the image, such as at a track or group of tracks, to improve the tracking performance also after an initial calibration.

Increasing the process noise is performed stepwise. The increase may be performed in predetermined steps where the process noise is increased by the same amount in each step. The increase may alternatively be performed using varying amounts of increase in process noise depending on the improvement in object tracking in the previous iteration.

The time period may be such that a plurality of object tracks is detected so that a mean track can be determined and evaluated. The time period may be set such that a certain number of object tracks have been determined. The number of object tracks may be set to ensure a sufficient statistical basis for the subsequent evaluation steps. As another example, the time period may be a fixed time period set based on a maximum desired time period.

A set of object tracks are determined in each iteration of the method and the evaluation is performed for the entire set, or for subsets of object tracks which herein will be discussed and referred to as groups of object tracks.

A camera includes an image sensor configured to capture image data which can be encoded to image data frames. A video stream is generally a set of consecutive encoded image data frames captured over time.

It is appreciated that an object may refer to a material object, a person, or an animal, in other words, any type of object that may be captured in a video stream and that may be tracked. A material object may for example be a vehicle for which the invention is particularly advantageous.

Object detection algorithms are *per* se known and may be selected from a range of algorithms including transformers, convolutional neural networks (CNNs), recurrent neural networks, decision tree classifiers such as random forest classifiers that are also efficient for classification. In addition, classifiers such as support vector machine classifiers and logistic regression classifiers are also conceivable. An object detection algorithm may be an object tracker employing a convolutional neural network trained for detecting and tracking objects according to its training. Furthermore, object/instance segmentation algorithms may also be applied for object detection.

In embodiments, the predetermined criterion may be a length criterion, wherein the step of evaluating may comprise determining a length parameter of the determined object tracks as the spatial parameter, and comparing the determined length parameter to the length criterion. The length parameter may be the length of the determined tracks. For example, the length parameter may be a statistical length parameter derived from the group of object tracks. Using the length as a parameter and criterion advantageously allows for increasing the process noise until the length of the determined tracks is satisfactory, i.e., that the objects' tracks can be followed for a sufficiently long track length that is useful for practical applications, preferably through the entire field of view of the camera.

In embodiments, the length parameter may be a mean length of the determined object tracks, and the length criterion may be that a variation in the mean length of the determined object tracks between consecutive iterations is near zero or below a predetermined threshold. In other words, if the mean length of the object tracks no longer increases despite increasing the process noise, the length criterion is fulfilled, and the final process noise is reached. Using the mean length as the evaluated parameter provides an easily measured and reliable parameter for testing and finding the final process noise that is suitable for a present application at hand.

In embodiments, the method may comprise calculating a variation in process noise between two iterations, and determining an expected variation in the mean length of the determined tracks between the two iterations based on the calculated variation in process noise, wherein the determined expected variation is used as the predetermined threshold for the evaluation in the next iteration. Advantageously, this may allow finding the final process noise in less time. For example, if large variation in process noise is determined, a large increase in mean length is expected. If this expectation is realized, the noise increase may again be large in the next iteration. If the increase in mean length is lower than expected the increase in process noise can be reduced for the next iteration. The process noise increase is in this way dynamically set based on the previous iterations.

In embodiments, the process noise may be increased along the path of the determined object tracks in the present iteration. That is, the process noise is increased along the detected object tracks, or at least along an average object track in the motion model of the object tracker. In this way, the probability of detecting an improved, or longer track in the next iteration increases.

Preferably, the process noise is increased at location along the tracks where an acceleration in an object's size or position in the image plane is detected.

The increase in process noise along the path of the determined object tracks may be based on a size of the detected objects along the path. At positions or points where objects are larger the increase in process noise is larger compared to at positions or points along the path where the objects are smaller.

In some embodiments, the process noise may be increased at end points of the determined object tracks. For example, the process noise may be increased only at the end points of the determined object tracks to in this way allow for increasing the length of the object tracks in the next iteration.

In embodiments, the step of determining object tracks may further comprise determining, based on a grouping criterion, which of multiple groups of object tracks that the determined object track belongs to, wherein the step of evaluating, and increasing the process noise is performed separately for the different groups of object tracks. In other words, the method may be performed separately for each of a set of groups of object tracks. After an observation period the tracks are grouped, or clustered, based on a grouping criterion. The process noise is then increased for an average track of each group separately. Grouping the tracks and increasing process noise for each group separately advantageously provides increasing the process noise where it is needed the most. Furthermore, it allows for tailoring the increase for different parts of the image in different ways so that the increase does not affect parts of the image where it is not needed and where an increase in process noise may in fact harm the tracking performance.

In embodiments, the grouping criterion may be a spatial criterion, wherein the method comprises determining start positions and/or end positions of the determined object tracks, grouping the object tracks based on their start positions and/or end positions and the spatial criterion indicating a mean start position and/or end position of the groups. In this way, the process noise is adjusted for spatially separated groups of tracks meaning that the process noise will be increased differently for different parts of the observed scene. This leads to the process noise being increased more where it is needed than where it is not needed thereby improving the overall object tracking performance in the scene.

In embodiments, the grouping criterion may be one or more of a spatial criterion, object size, object track variability, and object speed. That is, the grouping may be based on different characteristics of the tracks leading to a more versatile grouping possibility. Preferably, a single spatial criterion is used for the grouping.

In embodiments, the step of evaluating may comprise determining a start position and/or an end position of the determined object tracks in a group of object tracks, comparing at least one of the start position and/or end position to the respective mean start position and/or mean end position being the predetermined criterion/a, wherein the process noise is increased for the group of object tracks as long as a deviation between at least one of the start position and/or the end position to the respective mean start position and/or mean end position exceeds a position threshold. The mean start position and the mean end position may be based on a mean object track for the respective group or the one object track that best represents the group, which can be determined based on e.g. a Mahalanobis distance. Under the assumption that tracks in each group should start and finish at similar locations, for example as is the case for vehicles travelling on a road, the process noise is increased as long as start and/or end positions deviate too much from the respective mean start position and/or mean end position which is an indication of lost or poor tracking performance. This is one advantageous way to evaluate whether the process noise should be increased where only the start and/or end positions need to be evaluated. If the end position of a new track is beyond or after the mean end position, that is, the track is longer than the mean path, then this is an indication that previously observed tracks were shorter than they should have been, thus tracking was lost and the process noise should be increased. Similarly, if the start position of a new track is deviates from the mean start position, the full track is likely not captured and the process noise needs to be increased.

**In** embodiments, the step of evaluating may comprise determining start positions of the determined object tracks and a mean end position of the determined object tracks in a group of object tracks, calculating an amount of start positions that fall within a distance threshold from the mean end position in the group of object tracks, the distance threshold being the predetermined criterion, wherein the process noise is increased for the group of object tracks as long as the amount of start positions that fall within the distance threshold from the mean end position exceeds a counter threshold. It may occur that a track is lost, and then reappears as a new track in a new detection. This new detection will have a new start position which may be relatively close to the mean end position, although it is a result of a lost and reappeared track. If this happens too often the process noise is increased such that the object tracks are not lost to reappear as a new track.

In embodiments, the step of evaluating may comprise determining a variation in size of the objects along the determined object tracks, wherein the process noise is increased only for groups of object tracks where the variation in size is equal to or exceeds a size threshold. A group for which the size does not change is likely not moving in the depth direction of the image. However, an object that has large acceleration or deceleration in the image plane but in reality, is moving with more or less constant speed likely moves towards or away from a camera, which are the cases preferably addressed herein and where a linear motion can appear non-linear.

In embodiments, the camera may be a static camera arranged to monitor a road on which vehicles travel as moving objects.

In embodiment, the object tracker may use a linear motion model. For example, the linear motion model may be a statistical motion filter such as a Kalman-filter. The motion is assumed to be a linear motion in the image plane.

The method may be performed locally in the camera. However, it is envisaged that the method may be performed in a remote server connected to a camera.

According to a second aspect, there is provided a control unit for performing the method according to anyone of the herein disclosed embodiments.

Further embodiments of and effects obtained through this second aspect of the present invention are largely analogous to those described above for the first aspect and the second aspect of the invention.

According to a third aspect of the present invention, there is provided a camera comprising a control unit according to the second aspect.

In an embodiment, the control unit may be connected to an output of the image sensor to receive image data directly from the image sensor.

Further embodiments of, and effects obtained through this third aspect of the present invention are largely analogous to those described above for the first aspect and the second aspect of the invention.

According to a fourth aspect of the present invention, there is provided computer program product comprising program code for performing, when executed by a control unit, the method of any of the herein discussed embodiments.

Further embodiments of, and effects obtained through this fourth aspect of the present invention are largely analogous to those described above for the other aspects of the invention.

A computer program product is further provided including a computer readable storage medium storing the computer program. The computer readable storage medium may for example be non-transitory, and be provided as e.g. a hard disk drive (HDD), solid state drive (SDD), USB flash drive, SD card, CD/DVD, and/or as any other storage medium capable of non-transitory storage of data.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

The various aspects of the invention, including its particular features and advantages, will be readily understood from the following detailed description and the accompanying drawings, in which:
Fig. 1 schematically illustrates an image capturing device according to embodiments of the invention;
Fig. 2 illustrates a vehicle travelling on a road that is monitored by a camera according to embodiments of the invention;
Fig. 3 is a flow-chart of method steps according to embodiments of the present invention;
Fig. 4 is a flow-chart of method steps according to embodiments of the present invention;
Fig. 5 illustrates vehicles travelling on a road that is monitored by a camera according to embodiments of the invention;
Fig. 6 is a flow-chart of method steps according to embodiments of the present invention;
Fig. 7 is a set of graphs illustrating mean lengths for different groups of object tracks according to embodiments of the invention;
Fig. 8 is a flow-chart of method steps according to embodiments of the present invention;
Fig. 9 is a flow-chart of method steps according to embodiments of the present invention; and
Fig. 10 is a block diagram of a camera according to embodiments of the present invention.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

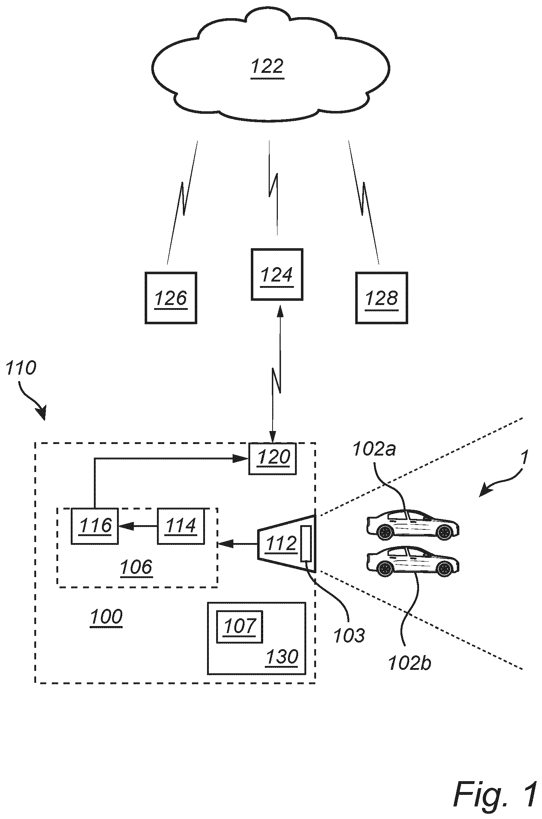

Turning now to the drawings and to fig 1 in particular, there is shown a scene 1 being monitored by an image capturing device 100, e.g., a camera such as a surveillance camera. In the scene 1, there is a set of objects 102a-b, here exemplified as vehicles 102a-b present in the scene 1.

The camera 100 is continuously monitoring the scene 1 by capturing a video stream of images of the scene 1 and the objects 102a-b therein. The camera 100 and a control unit 106 are part of a system 110, where the control unit 106 may either be a separate stand-alone control unit or be part of the camera 100. It is also envisaged that the control unit 106 is remotely located such as on a server and thus operates as a Cloud-based service.

The camera 100 may be mounted on a building, on a pole, or in any other suitable position depending on the specific application at hand. In the case of monitoring vehicles 102a-b, the camera is mounted as a roadside camera. That is, the camera 100 is a fixed or static camera that does not move around relative to or within the scene 1. Further, the camera 100 may be a visible light camera, an infrared (IR) sensitive camera or a thermal (long-wavelength infrared (LWIR)) camera. Further, image acquisition devices employing LIDAR and radar functionalities may also be conceivable. It is also envisaged that the camera 100 is a combination of the mentioned camera technologies.

The camera 100 further comprises an image capturing module 112, an image processing pipeline 114, an encoder 116, a data storage 130, and optionally an input and output interface 120 configured as a communication interface between the camera 100 and a network 122 via a radio link 124.

The image capturing module 112 comprises various components such as a lens and an image sensor 103 comprising multiple pixels, where the lens is adapted to project an image onto the pixels of the image sensor 103. The image data from the image sensor is forwarded to the image processing pipeline 114 and the encoder 116.

The image processing pipeline 114 is configured to perform a range of various operations on image frames received from the image sensor 103. Such operations may include filtering, demosaicing, color correction, noise filtering for eliminating spatial and/or temporal noise, distortion correction for eliminating effects of e.g., barrel distortion, global and/or local tone mapping, e.g., enabling imaging of scenes containing a wide range of intensities, transformation, e.g., rotation, flat-field correction, e.g., for removal of the effects of vignetting, application of overlays, e.g., privacy masks, explanatory text, etc. However, it should be noted that some of these operations, e.g., transformation operations, such as correction of barrel distortion, rotation, etc., may be performed by one or more modules, components or circuits arranged outside the image processing pipeline 114, for example in one or more units between the image processing pipeline 114 and the encoder 116.

Following the image processing pipeline 114, the image frames are forwarded to the encoder 116, in which the image frames are encoded according to an encoding protocol, signed, and forwarded to a receiver, e.g., a client 126 and/or a server 128, over the network 122 using the input/output interface 120. It should be noted that the camera 100 illustrated in fig. 1 also includes numerous other components, such as processors, memories, etc., which are common in conventional camera systems and whose purpose and operations are well known to those having ordinary skill in the art. Such components have been omitted from the illustration and description of fig. 1 for clarity reasons.

The camera 100 may also comprise the data storage 130 for optionally storing data relating to the capturing of the video stream. Thus, the data storage may store the captured video stream. The data storage may be a non-volatile memory, such as an SD card.

There are a number of conventional video encoding formats. Some common video encoding formats that work with the various embodiments of the present invention include: JPEG, Motion JPEG (MJPEG), High Efficiency Video Coding (HEVC), also known as H.265 and MPEG-H Part 2; Advanced Video Coding (AVC), also known as H.264 and MPEG-4 Part 10; Versatile Video Coding (VVC), also known as H.266, MPEG-I Part 3 and Future Video Coding (FVC); VP9, VP10 and AOMedia Video 1 (AV1), just to give some examples.

The control unit 106 employs an object tracker 107 for tracking moving objects 102a-b. The object tracker 107 uses a motion model associated with process noise for detecting and tracking objects. The motion model is often a statistical motion filter such as a Kalman filter, where the motion is assumed to be linear. However, this is not always the case and to handle a deviation from a linear motion, a process noise of the filter is set to an appropriate value.

Generally, process noise dictates the amount of deviation, or uncertainty, of the true motion of the object from the chosen motion model. That is, if the process noise is set too low, the tracker will struggle to track objects with non-linear motion. Conversely, if the process noise is set too high, a decrease in tracking performance may occur, for example by an increased number of identity switches. This can happen with objects which have linear motion or even static objects, due to spatial noise and jitter in the object detections.

Furthermore, even if the motion of the objects is actually linear, for example in the case of vehicles travelling on a highway, the motion can become non-linear in the image plane.

The embodiments of the present disclosure address the drawbacks of prior art by suggesting a method where the process noise is iteratively increased until the tracking of objects becomes more complete. The invention is particularly advantageous for tracking objects that move along relatively well-defined paths such as vehicles on a road although other moving objects are also envisaged for embodiments of the invention.

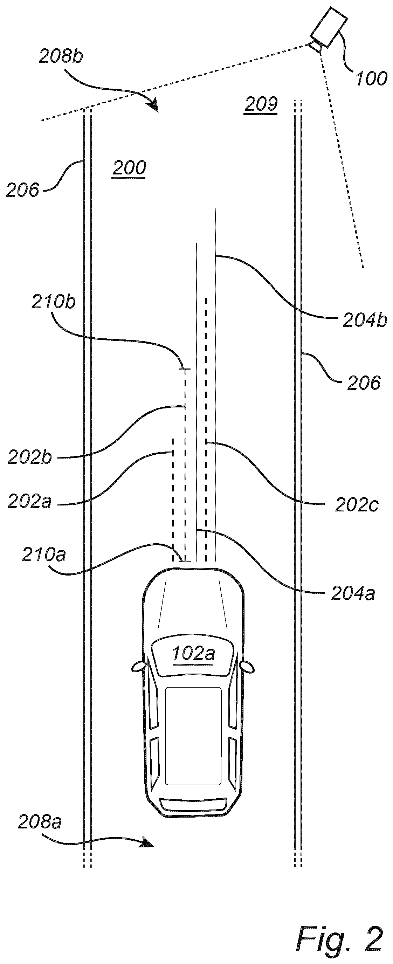

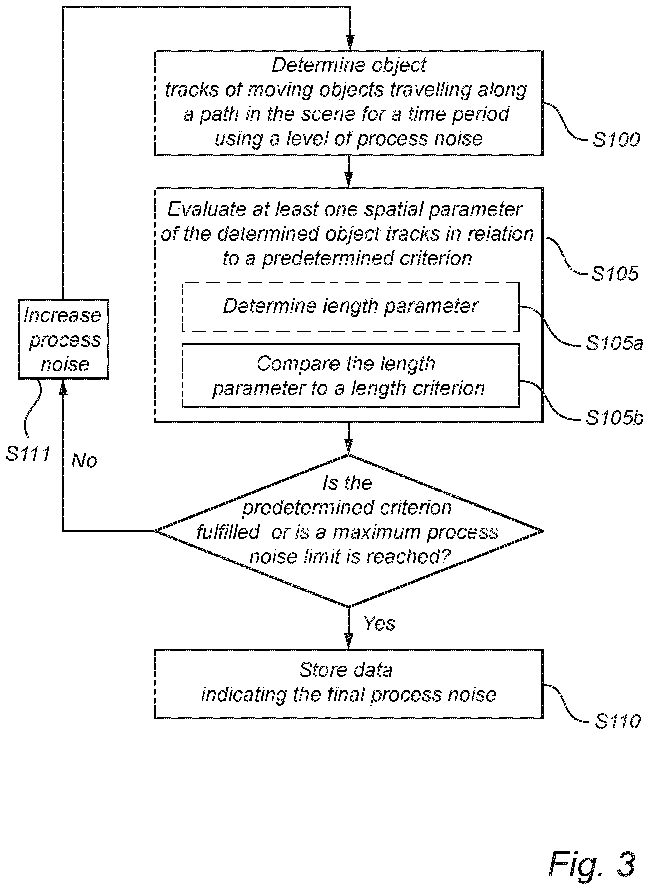

Fig. 2 illustrates a vehicle 102a travelling on a road 200 and fig. 3 is a flow-chart of method steps according to embodiments of the invention. Turning first to fig 2, a static camera 100 monitors the vehicle 102a and other vehicles on the road 200. The camera 100 uses an object tracker to that employs a motion model to track the objects, here exemplified as vehicles including vehicle 102a (only one is shown) travelling on the road 200.

In step S100 of fig. 3, determining, using the object tracker 107 of the camera 100, object tracks 202a-c (dashed tracks) of moving objects travelling along a path in the scene for a time period using a level of process noise. The object tracker uses the motion model to track the vehicles passing in and out of the field of view of the camera 100 during a time period. One track 202a-c represents tracking of a single vehicle. That is, the here shown example three tracks 202a-c correspond to three detected and tracked vehicles.

In step S105, evaluating, by the control unit 106, at least one spatial parameter of the determined object tracks 202a-c in relation to a predetermined criterion. That is, the control unit 106 determines a spatial parameter of the object tracks 202a-c, for example related to start points, end points, length, or motion patterns of the determined object tracks 202a-c.

If the predetermined criterion is fulfilled, or a maximum process noise is reached, the data indicating the present process noise is stored, in step S110, in a memory 130 as the final process noise to be used by the object tracker in the camera 100.

However, in the negative, if the predetermined criterion is not fulfilled, the process noise is increased, in step S111, and the method starts over at step S100.

In the next iteration, a new set of object tracks 204a-b (solid tracks) are determined using the increased process noise in step S100. The new set of object tracks are evaluated in view of the predetermined criterion in step S105. If the predetermined criterion is fulfilled, or a maximum process noise is reached, the data indicating the present process noise is stored, in step S110, in a memory 130 as the final process noise to be used by the object tracker in the camera 100. If the predetermined criterion is not fulfilled by the new set of object tracks the process noise is increased, S111, and the method again starts over at step S100.

The steps of determining object tracks, S100, and evaluating, S105, at least one spatial parameter for object tracks during subsequent time periods using increased process noise for each iteration are repeated until the predetermined criterion is fulfilled or a maximum process noise limit is reached.

In one embodiment, the predetermined criterion is a length criterion. In this case, the step S105 of evaluating comprises determining, S105a, a length parameter of the determined object tracks as the spatial parameter, and comparing, S105b, the determined length parameter to the length criterion. The length parameter relates to how long the observed tracks are, the longer they are the better the tracking performance, thus the object tracker does not lose the track or suffer from ID switches along the path in the scene. In the case shown in fig. 2, the vehicles, represented by vehicle 102a, are travelling along a road which is a well-defined space, and it can be assumed that the vehicles will travel within the limits 206 of the road 200. Thus, the possible length of the observed tracks can be assumed to be from one end 208a to the other end 208b or the road 200 within the field of view 209 of the camera 100. In other words, a length criterion and length parameter that considers the length of tracks may advantageously be used for evaluating the performance of the object tracker using the motion model, such as a linear motion model. Such a linear motion model may be a Kalman filter that assumes a linear motion in the image plane of the camera.

In one example, the length parameter is a mean length of the determined object tracks 202a-c, 204a-b. The length criterion is in this case that a variation in the mean length of the determined object tracks between consecutive iterations is near zero or below a predetermined threshold. In other words, when an increase in process noise no longer increases the mean length of the object tracks, the final process noise is reached. As an example, in fig 2, a first mean length is the mean length of the object tracks 202a-c captured and tracked during a first time period. A second mean length is the mean length of the object tracks 204a-b captured and tracked during a second, consecutive time period. If the second mean length is larger than the first mean length, the method repeats the steps S100-S105 again with increased process noise. If the mean length has not increased, or has not increased significantly with some margin, the final process noise is reached, and no further increases are needed.

The process noise can be increased at different locations along the tracks. For example, the process noise is increased along the path of the determined object tracks in the present iteration. That is, in the motion model, for example a Kalman filter, the process noise is increased at positions along the path of the object tracks. In one example the process noise is increased at end points of the determined object tracks. However, it is preferred to increase the process noise for the entire track length. The process noise increase may be scaled along the track or average track based on the size of the detected objects along the track, that is, the process noise is increased by a larger amount for points along the track where a detected object is relatively larger than points where the detected object is relatively smaller.

The process noise is preferably increased at positions where a position or size of the object accelerates in the image plane of the camera 100. These positions are the positions where a linear motion model may, more likely, lose a track.

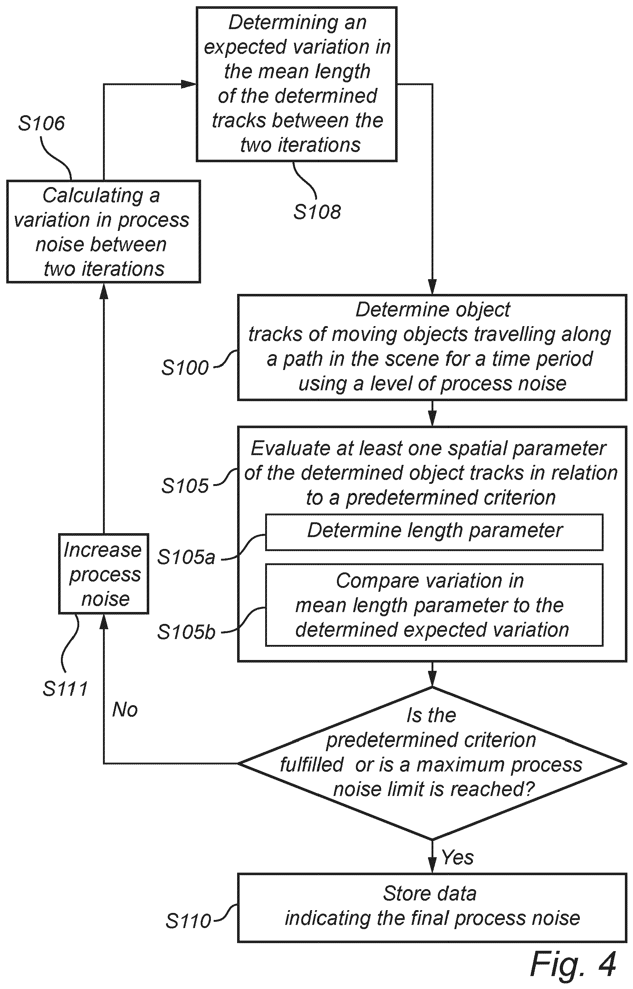

Turning to the flow-chart in fig. 4. In some embodiments, a variation in process noise between two iterations, a first and a second iteration can be used to estimate what the variation in mean length should be in the second iteration relative to the first iteration. That is, a first process noise is used in a first iteration, the process noise is increased to a second process noise. The difference between the first and second process noise is then used for estimating what the variation in mean length of the tracks should be after the increase in process noise, thus, using the second process noise.

Step S106 includes to calculate a variation in process noise between two iterations, and step S108 to determine an expected variation in the mean length of the determined object tracks between the two iterations based on the calculated variation in process noise. The determined expected variation is used as the predetermined threshold for the evaluation of the variation in mean length in step S105b in the next iteration. The expected increase or variation in mean length can be determined by evaluating historical increases in process noise and what variations in mean length of the determined tracks it led to.

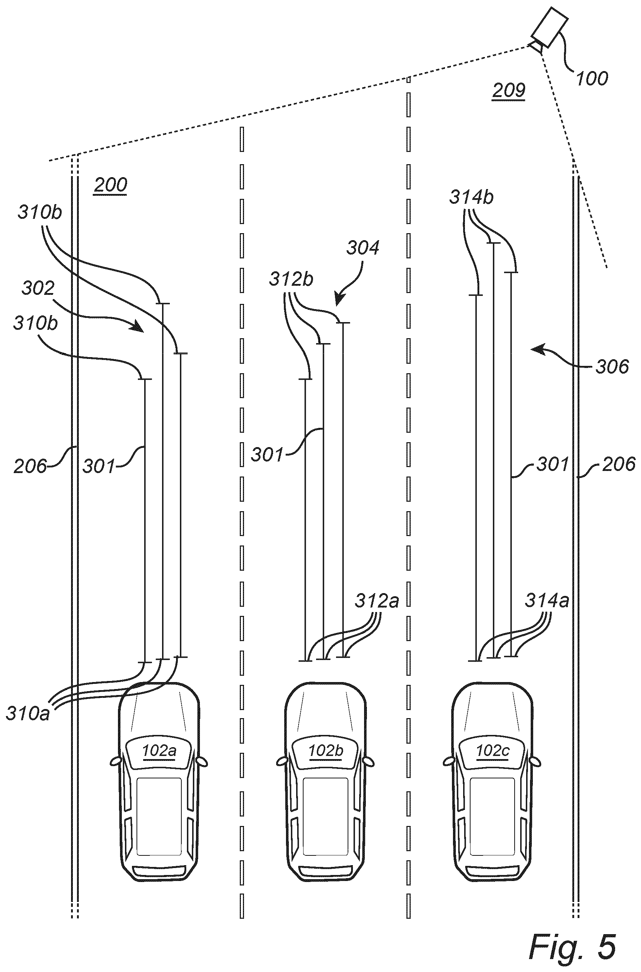

Fig. 5 illustrates vehicles 102a-c travelling on a road 200. In some embodiments, the detected object tracks are clustered into groups. In fig. 5 this is exemplified by three groups 302, 304, and 306. The grouping enables increasing the process noise individually for each of the groups of tracks, and thereby tailoring the process noise for different parts of the image without affecting other parts of the image where it is not needed.

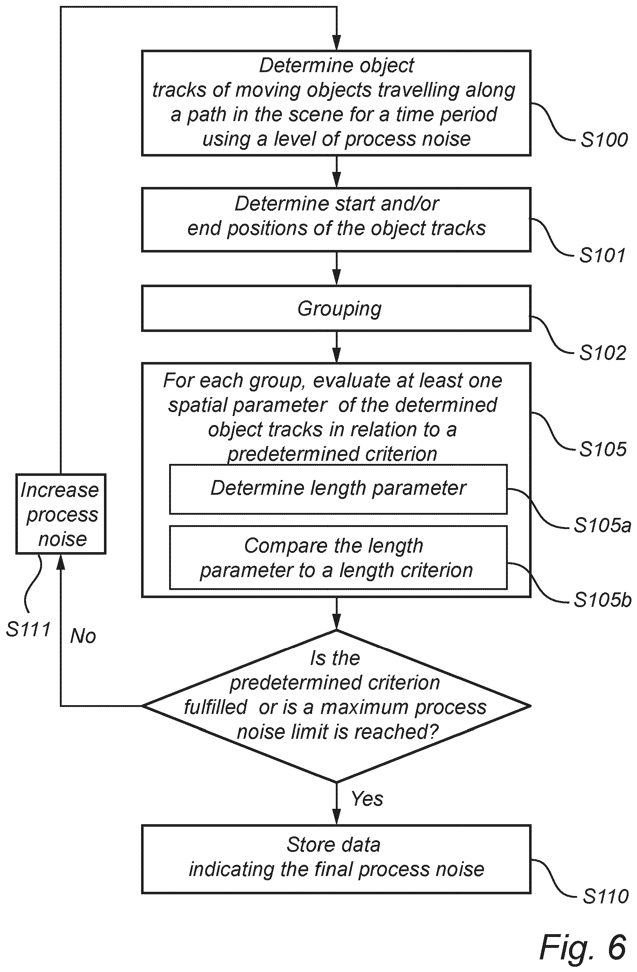

Fig. 6 is a flow-chart of method steps according to embodiment of the invention. In addition to the steps described above, the method includes a step S102 of determining, based on a grouping criterion, which of multiple groups of object tracks that the determined object track belongs to. The step S105 of evaluating, and subsequently increasing the process noise is performed separately for the different groups 302, 304, 306 of object tracks. In other words, after a time period of detecting object tracks 301, grouping of the object tracks 301 is performed by a clustering algorithm. The method proceeds with the evaluation and process noise adjustment for each of the groups separately. Separate final process noise data are stored for each of the groups. That is, the groups may have different final process noises.

Clustering of tracks may be performed in various ways, such as using a thresholding approach where positions or points along one track are compared to positions or points along another track, if a certain number of points are closer to each other than a threshold, they are determined to belong to the same group. Another approach is to compare start and end positions of the tracks that should not deviate from each by more than a preset distance.

The grouping criterion may be a spatial criterion, object size, object track variability, and object speed.

In embodiment where the grouping criterion is a spatial criterion, the method may comprise a step S101 of determining start positions 310a, 312a, 314a and/or end positions 310b, 312b, 314b of the determined object tracks 301. The step S102 of grouping the object tracks 301 is based on their start positions and/or end positions and the spatial criterion indicating a mean start position and/or end position of the groups.

That is, in embodiments, the clustering algorithm will group tracks based on the positions of the start positions 310a, 312a, 314a of the determined object tracks. The clustering algorithms may, in other embodiments, group tracks based on the positions of the end positions 310b, 312b, 314b of the determined object tracks. In other embodiments, the clustering algorithm may group tracks based on the positions of the start positions 310a, 312a, 314a and the end positions 310b, 312b, 314b of the determined object tracks.

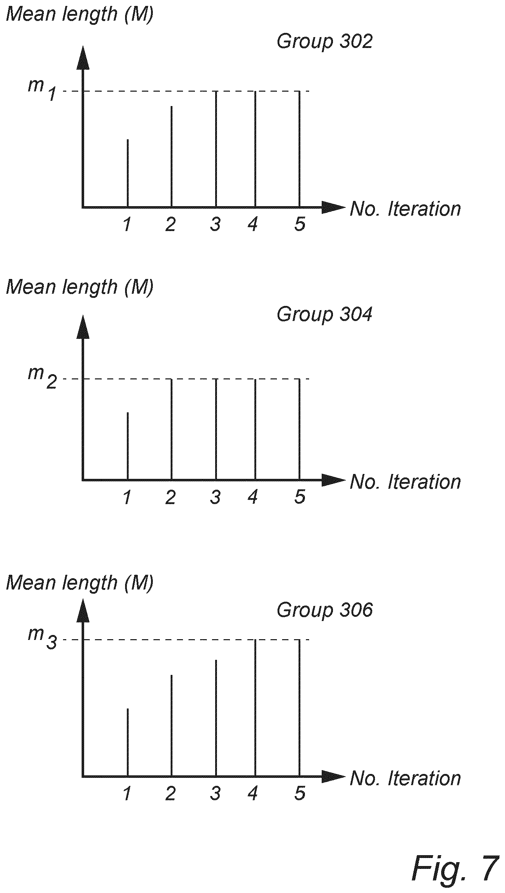

Fig. 7 illustrates the mean length of groups of object tracks 302, 304, 306 as a function of number of iterations, or equally as a function of time. The graphs are only to exemplify and provide clarity to the invention. In reality, the number of iterations may vary from the example herein shown.

Object tracks 301 are determined for a time duration as laid out in step S100. In step S101, the determined object tracks 301 are grouped according to the grouping criterion, such as for example start 310a, 312a, 314a and/or end positions 310b, 312b, 314b of the determined tracks 301. The mean length of the tracks in each group 302, 304, 306 is determined in step S105a for the present iteration (1). The process noise may herein be increased from the initial low level.

The same process is repeated for a new sets of object tracks which are grouped and evaluated but with the increased process noise until a predetermined criterion is fulfilled, for example that the mean length no longer increases. For group 302, the mean length is m1 and no longer increases in iteration 4, for group 304, the mean length is m2 and no longer increases in iteration 3, and for group 306, the mean length is m3 and no longer increases in iteration 5. The final process noise reached when the mean length no longer increases for the respective group is output and stored as the final process noise.

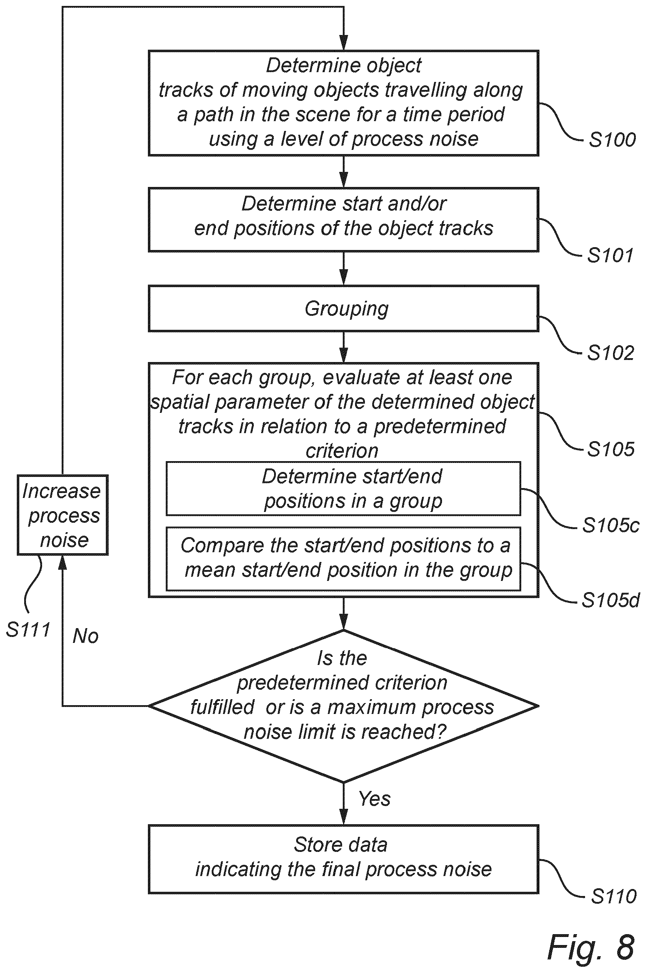

Turning to the flow-chart in fig. 8. In some embodiments, evaluating in step S105 comprises determining, in step S105c a start position 310a, 312a, 314a and/or an end position 310b, 312b, 314b of the determined object tracks 301 in a group 302, 304, 306 of object tracks 301.

In step S105d, comparing at least one of the start position and/or end position to the respective mean start position and/or mean end position. That is, for each group 302, 304, 306, when a new set of object tracks have been determined, the start positions and/or end positions are compared to a mean start position and/or mean end position for the group 302, 304, 306. In one example, the start positions and/or end positions of the new tracks contribute to the mean start position and/or mean end position for the respective group 302, 304, 306 before the comparison. In another example, it is the mean start position and/or mean end position of the new set of object tracks that is compared to the mean start position and/or mean end position for the respective group 302, 304, 306. In this case, the process noise is increased for the group 302, 304, 306 of object tracks as long as a deviation between at least one of the new start positions and/or the new end positions, or the means thereof, to the respective mean start position and/or mean end position exceeds a position threshold. In other words, it is expected that the start position and/or end position for new tracks to be relatively close to the mean start position and/or mean end positions. If this is not the case, the process noise is increased, especially at the start 310a, 312a, 314a and/or end positions 310b, 312b, 314b.

In some embodiments, the step of evaluating may comprise the step S105c of determining start positions of the determined object tracks and a mean end position of the determined object tracks in a group of object tracks. Following this step, the control unit 106 may calculate an amount of start positions 310a that fall within a distance threshold from the mean end position in the group 302 of object tracks. The distance threshold serves as the predetermined criterion. In this case, the process noise is increased for the group of object tracks as long as the amount of start positions that fall within the distance threshold from the mean end position exceeds a counter threshold. A new track detection will have a new start position. If the new start position is relatively close to the mean end position, it is likely a result of a lost and reappeared track. If this happens too often the process noise is increased at the positions of and before the new start positions such that the object tracking performance increases.

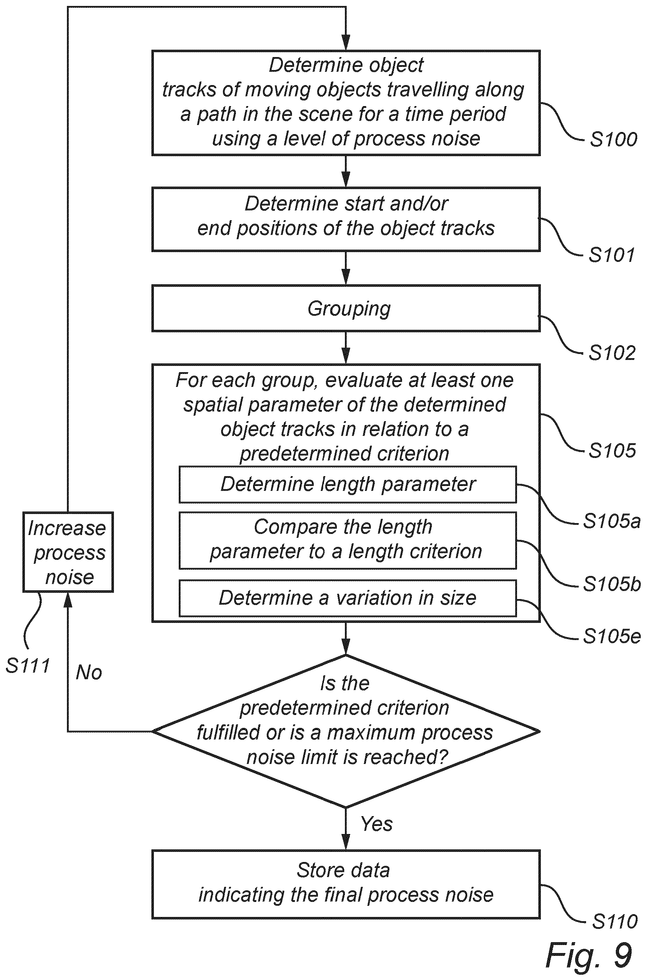

In some embodiments, here laid out in fig. 9, the step S105 of evaluating further comprises step S105e to determine a variation in size of the objects along the determined object tracks. The predetermined criterion is here that the variation in size is equal to or exceeds a size threshold, in other words, the process noise is increased only for groups of object tracks where the variation in size is equal to or exceeds the size threshold. A group for which the size does not change is likely not moving in the depth direction of the image. However, an object that has large acceleration or deceleration in the image plane but in reality is moving with more or less constant speed likely moves towards or away from a camera. In such case a linear motion can appear non-linear for which a process noise increase may be appropriate.

The method may be performed by control unit 106.

The method described may preferably be performed locally in the camera 100. However, it is also envisaged that the method is performed on a remote server connected to camera 100.

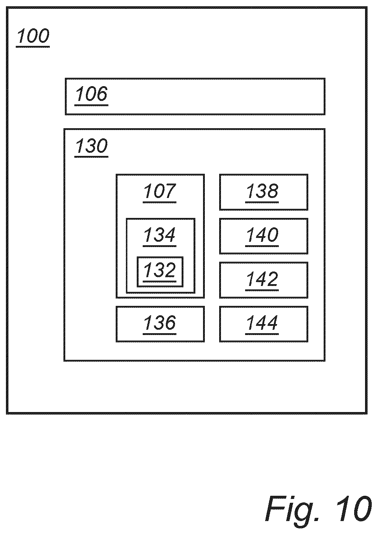

Fig. 10 is a block diagram of a camera 100 comprising a control unit 106 configured to adjust a process noise 132 of an object tracker 107 in the camera configured to monitor a scene including moving objects. The object tracker 107 is stored in the memory 130 accessible to the control unit 106 and uses a motion model 134 associated with the process noise 132. The control unit 106 is configured to determine, using the object tracker 107, object tracks 136 of moving objects travelling along a path in the scene for a time period using a level of process noise 132. The control unit 106 is further configured to evaluate at least one spatial parameter 138 of the determined object tracks in relation to a predetermined criterion 140.

The control unit 106 repeats the steps of determining object tracks and evaluating at least one spatial parameter 138 for object tracks during subsequent time periods using increased process noise 132 for each iteration until the predetermined criterion 140 is fulfilled or a maximum process noise limit 142 is reached. Once one of the conditions is fulfilled, the control unit 106 stores data 144 indicating the final process noise in the memory 130.

There is further provided a computer program comprising instructions which, when the program is executed by a computer, cause the computer to carry out the method of any one of the herein disclosed embodiments. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

The computer program comprises code for: determining, using the object tracker, object tracks of moving objects travelling along a path in the scene for a time period using a level of process noise, evaluating at least one spatial parameter of the determined object tracks in relation to a predetermined criterion, repeating the steps of determining object tracks and evaluating at least one spatial parameter for object tracks during subsequent time periods using increased process noise for each iteration until the predetermined criterion is fulfilled or a maximum process noise limit is reached, and storing data indicating the final process noise.

The control unit includes a microprocessor, microcontrol unit, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontrol unit or programmable digital signal processor mentioned above, the processor may further include computer executable code that controls operation of the programmable device.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art.

In addition, variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. A computer-implemented method to adjust a process noise of an object tracker in a camera (100) configured to monitor a scene (200) including moving objects (102a-c), the object tracker (107) uses a motion model (134) associated with process noise (132), wherein:
determining (S100), using the object tracker, object tracks (136, 202a-c, 204a-b, 301) of moving objects travelling along a path in the scene for a time period using a level of process noise,
evaluating (S105) at least one spatial parameter of the determined object tracks in relation to a predetermined criterion (140),
repeating the steps of determining (S100) object tracks and evaluating (S105) at least one spatial parameter for object tracks during subsequent time periods using increased process noise for each iteration until the predetermined criterion is fulfilled or a maximum process noise limit is reached, and
storing (S110) data (144) indicating the final process noise.

2. The method according to claim 1, the predetermined criterion being a length criterion, wherein the step of evaluating comprises:
determining (S105a) a length parameter of the determined object tracks as the spatial parameter, and
comparing (S105b) the determined length parameter to the length criterion.

3. The method according to claim 2, wherein the length parameter is a mean length (M) of the determined object tracks, and the length criterion is that a variation in the mean length of the determined object tracks between consecutive iterations is near zero or below a predetermined threshold.

4. The method according to claim 3, comprising:
calculating (S106) a variation in process noise between two iterations,
determining (S108) an expected variation in the mean length of the determined tracks between the two iterations based on the calculated variation in process noise, wherein the determined expected variation is used as the predetermined threshold for the evaluation in the next iteration.

5. The method according to any one of the preceding claims, wherein the process noise is increased along the path of the determined object tracks in the present iteration.

6. The method according to claim 5, wherein the process noise is increased at end points of the determined object tracks.

7. The method according to any one of the preceding claims, the step of determining object tracks further comprises:
determining (S102), based on a grouping criterion, which of multiple groups of object tracks that the determined object track belongs to, wherein the step of evaluating, and increasing the process noise is performed separately for the different groups of object tracks.

8. The method of claim 7, the grouping criterion being a spatial criterion, wherein the method comprises:
determining (S101) start positions (210a, 310a, 312a, 314a) and/or end positions (210b, 310b, 312b, 314b) of the determined object tracks,
grouping (S102) the object tracks based on their start positions and/or end positions and the spatial criterion indicating a mean start position and/or end position of the groups.

9. The method of claim 7, wherein the grouping criterion is one or more of a spatial criterion, object size, object track variability, and object speed.

10. The method according to any one of claim 8 wherein the step of evaluating comprises:
determining (S105c) a start position and/or an end position of the determined object tracks in a group of object tracks,
comparing (S105d) at least one of the start position and/or end position to the respective mean start position and/or mean end position being the predetermined criterion,
wherein the process noise is increased for the group of object tracks as long as a deviation between at least one of the start position and/or the end position to the respective mean start position and/or mean end position exceeds a position threshold.

11. The method according to any one of the preceding claims, wherein the step of evaluating comprises:
determining (S105e) a variation in size of the objects along the determined object tracks,
wherein the process noise is increased only for groups of object tracks where the variation in size is equal to or exceeds a size threshold.

12. The method according to any one of the preceding claims, the camera being a static camera arranged to monitor a road on which vehicles travel as moving objects, and wherein the object tracker uses a linear motion model.

13. A control unit (106) for performing the method according to any one of the preceding claims.

14. A camera (100) comprising a control unit (106) according to claim 13.

15. A computer program product comprising program code for performing, when executed by a control unit, the method of any one of claims 1 to 12.

## Patentansprüche

1. Computerimplementiertes Verfahren zum Anpassen eines Prozessrauschens eines Objektverfolgers in einer Kamera (100), die konfiguriert ist, um eine Szene (200) zu überwachen, die sich bewegende Objekte beinhaltet (102a-c) beinhaltet, wobei der Objektverfolger (107) ein Bewegungsmodell (134) verwendet, das mit einem Prozessrauschen (132) assoziiert ist, wobei:
Ermitteln (S100), unter Verwendung des Objektverfolgers, von Objektverfolgungen (136, 202a-c, 204a-b, 301) von sich bewegenden Objekten, die sich entlang eines Weges für einen Zeitraum in der Szene bewegen, wobei ein Grad eines Prozessrauschens verwendet wird,
Auswerten (S105) von mindestens einem räumlichen Parameter der ermittelten Objektverfolgungen in Bezug auf ein vorbestimmtes Kriterium (140),
Wiederholen der Schritte des Ermittelns (S100) von Objektverfolgungen und des Auswertens (S105) von mindestens einem räumlichen Parameter für die Objektverfolgungen während nachfolgender Zeitperioden unter Verwendung eines erhöhten Prozessrauschens für jede Iteration, bis das vorbestimmte Kriterium erfüllt ist oder eine maximale Grenze für das Prozessrauschen erreicht wird, und
Speichern (S110) von Daten (144), die das endgültige Prozessrauschen anzeigen.

2. Verfahren nach Anspruch 1, wobei das vorbestimmte Kriterium ein Längenkriterium ist, wobei der Schritt des Auswertens umfasst:
Ermitteln (S105a) eines Längenparameters der ermittelten Objektverfolgungen als den räumlichen Parameter, und
Vergleichen (S105b) des ermittelten Längenparameters mit dem Längenkriterium.

3. Verfahren nach Anspruch 2, wobei der Längenparameter eine mittlere Länge (M) der ermittelten Objektverfolgungen ist und wobei das Längenkriterium ist, dass eine Variation der mittleren Länge der ermittelten Objektverfolgungen zwischen aufeinanderfolgenden Iterationen nahe Null oder unter einem vorbestimmten Schwellenwert liegt.

4. Verfahren nach Anspruch 3, das umfasst:
Berechnen (S106) einer Variation des Prozessrauschens zwischen zwei Iterationen,
Ermitteln (S108) einer erwarteten Variation der mittleren Länge der ermittelten Verfolgungen zwischen den zwei Iterationen basierend auf der berechneten Variation des Prozessrauschens, wobei die ermittelte erwartete Variation als der vorbestimmte Schwellenwert für die Auswertung in der nächsten Iteration verwendet wird.

5. Verfahren nach einem der vorhergehenden Ansprüche, wobei das Prozessrauschen entlang des Weges der ermittelten Objektverfolgungen in der aktuellen Iteration erhöht wird.

6. Verfahren nach Anspruch 5, wobei das Prozessrauschen an Endpunkten der ermittelten Objektverfolgungen erhöht wird.

7. Verfahren nach einem der vorhergehenden Ansprüche, wobei der Schritt des Ermittelns von Objektverfolgungen ferner umfasst:
Ermitteln (S102), basierend auf einem Gruppierungskriterium, zu welcher von mehreren Gruppen von Objektverfolgungen die ermittelte Objektverfolgung gehört, wobei der Schritt des Auswertens und des Erhöhens des Prozessrauschens für die verschiedenen Gruppen von Objektverfolgungen getrennt durchgeführt wird.

8. Verfahren nach Anspruch 7, wobei das Gruppierungskriterium ein räumliches Kriterium ist, wobei das Verfahren umfasst:
Ermitteln (S101) von Startpositionen (210a, 310a, 312a, 314a) und/oder Endpositionen (210b, 310b, 312b, 314b) der ermittelten Objektverfolgungen,
Gruppieren (S102) der Objektverfolgungen basierend auf ihren Startpositionen und/oder ihren Endpositionen und dem räumlichen Kriterium, das eine mittlere Startposition und/oder Endposition der Gruppen anzeigt.

9. Verfahren nach Anspruch 7, wobei das Gruppierungskriterium eines oder mehrere von einem räumlichen Kriterium, einer Objektgröße, einer Objektverfolgungsvariabilität und einer Objektgeschwindigkeit ist.

10. Verfahren nach Anspruch 8, wobei der Schritt des Auswertens umfasst:
Ermitteln (S105c) einer Startposition und/oder einer Endposition der ermittelten Objektverfolgungen in einer Gruppe von Objektverfolgungen,
Vergleichen (S105d) von mindestens einer der Startposition und/oder der Endposition mit der jeweiligen mittleren Startposition und/oder der mittleren Endposition, die das vorbestimmte Kriterium ist,
wobei das Prozessrauschen für die Gruppe von Objektverfolgungen erhöht wird, solange eine Abweichung zwischen mindestens einer der Startposition und/oder der Endposition zu der jeweiligen mittleren Startposition und/oder mittleren Endposition einen Positionsschwellenwert überschreitet.

11. Verfahren nach einem der vorhergehenden Ansprüche, wobei der Schritte des Auswertens umfasst:
Ermitteln (S105e) einer Variation der Größe der Objekte entlang der ermittelten Objektverfolgungen,
wobei das Prozessrauschen nur für Gruppen von Objektverfolgungen erhöht wird, bei denen die Variation der Größe gleich einem oder größer als ein Größenschwellenwert ist.

12. Verfahren nach einem der vorhergehenden Ansprüche, wobei die Kamera eine statische Kamera ist, die angeordnet ist, um eine Straße zu überwachen, auf der Fahrzeuge als sich bewegende Objekte fahren, und wobei der Objektverfolger ein lineares Bewegungsmodell verwendet.

13. Steuereinheit (106) zum Durchführen des Verfahrens nach einem der vorhergehenden Ansprüche.

14. Kamera (100), die eine Steuereinheit (106) nach Anspruch 13 umfasst.

15. Computerprogrammprodukt, das einen Programmcode umfasst, um, wenn er von einer Steuereinheit ausgeführt wird, das Verfahren nach einem der Ansprüche 1 bis 12 durchzuführen.

## Revendications

1. Procédé mis en œuvre par ordinateur pour ajuster un bruit de processus d'un suiveur d'objets dans une caméra (100) configurée pour surveiller une scène (200) comprenant des objets en mouvement (102a-c), le suiveur d'objets (107) utilisant un modèle de mouvement (134) associé à un bruit de processus (132), le procédé comprenant les étapes suivantes :
déterminer (S100), à l'aide du suiveur d'objets, des pistes d'objets (136, 202a-c, 204a-b, 301) d'objets en mouvement se déplaçant le long d'un trajet dans la scène pendant une certaine période de temps en utilisant un niveau de bruit de processus,
évaluer (S105) au moins un paramètre spatial des pistes d'objets déterminées relativement à un critère prédéterminé (140),
répéter les étapes de détermination (S100) de pistes d'objets et évaluer (S105) au moins un paramètre spatial pour des pistes d'objets pendant des périodes de temps ultérieures en utilisant un bruit de processus accru pour chaque itération jusqu'à ce que le critère prédéterminé soit satisfait ou qu'une limite maximale de bruit de processus soit atteinte, et
stocker (S110) les données (144) indiquant le bruit de processus final.

2. Procédé selon la revendication 1, le critère prédéterminé étant un critère de longueur, où l'étape d'évaluation comprend les étapes suivantes :
déterminer (S105a) un paramètre de longueur des pistes d'objets déterminées en tant que paramètre spatial, et
comparer (S105b) le paramètre de longueur déterminé au critère de longueur.

3. Procédé selon la revendication 2, dans lequel le paramètre de longueur est une longueur moyenne (M) des pistes d'objets déterminées, et le critère de longueur est qu'une variation de la longueur moyenne des pistes d'objets déterminées entre des itérations consécutives est proche de zéro ou est inférieure à un seuil prédéterminé.

4. Procédé selon la revendication 3, comprenant les étapes suivantes :
calculer (S106) une variation de bruit de processus entre deux itérations,
déterminer (S108) une variation attendue de la longueur moyenne des pistes déterminées entre les deux itérations sur la base de la variation calculée du bruit de processus, la variation attendue déterminée étant utilisée comme seuil prédéterminé pour l'évaluation à l'itération suivante.

5. Procédé selon l'une quelconque des revendications précédentes, dans lequel le bruit de processus est augmenté le long du trajet des pistes d'objets déterminées dans la présente itération.

6. Procédé selon la revendication 5, dans lequel le bruit de processus est augmenté aux points finaux des pistes d'objets déterminées.

7. Procédé selon l'une quelconque des revendications précédentes, l'étape de détermination de pistes d'objets comprenant en outre l'étape suivante :
déterminer (S102), sur la base d'un critère de regroupement, auquel groupe, parmi de multiples groupes de pistes d'objets, appartient la piste d'objet déterminée, où l'étape d'évaluation et d'augmentation du bruit de processus est exécutée séparément pour les différents groupes de pistes d'objets.

8. Procédé selon la revendication 7, le critère de regroupement étant un critère spatial, le procédé comprenant les étapes suivantes :
déterminer (S101) des positions de début (210a, 310a, 312a, 314a) et/ou des positions de fin (210b, 310b, 312b, 314b) des pistes d'objets déterminées,
regrouper (S102) les pistes d'objets sur la base de leurs positions de début et/ou de fin et du critère spatial indiquant une position de début moyenne et/ou de fin des groupes.

9. Procédé selon la revendication 7, dans lequel le critère de regroupement est l'un ou plusieurs d'un critère spatial, d'une taille d'objet, d'une variabilité de piste d'objet et d'une vitesse d'objet.

10. Procédé selon la revendication 8, dans lequel l'étape d'évaluation comprend les étapes suivantes :
déterminer (S105c) une position de début et/ou une position de fin des pistes d'objets déterminées dans un groupe de pistes d'objets,
la comparaison (S105d) d'au moins une parmi la position de début et/ou la position de fin avec la position moyenne de début et/ou la position moyenne de fin respectives étant le critère prédéterminé,
où le bruit de processus est augmenté pour le groupe de pistes d'objets tant qu'un écart entre au moins l'une de la position de début et/ou de la position de fin par rapport à la position de début moyenne et/ou à la position de fin moyenne respectives dépasse un seuil de position.

11. Procédé selon l'une quelconque des revendications précédentes, dans lequel l'étape d'évaluation comprend :
la détermination (S105e) d'une variation de taille des objets le long des pistes d'objets déterminées,
où le bruit de processus n'est augmenté que pour des groupes de pistes d'objets où la variation de taille est égale ou supérieure à un seuil de taille.

12. Procédé selon l'une quelconque des revendications précédentes, la caméra étant une caméra statique agencée pour surveiller une route sur laquelle les véhicules se déplacent en tant qu'objets mobiles, et où le suiveur d'objets utilise un modèle de mouvement linéaire.

13. Unité de régulation (106) destinée à exécuter le procédé selon l'une quelconque des revendications précédentes.

14. Caméra (100) comprenant une unité de commande (106) selon la revendication 13.

15. Produit programme informatique comprenant un code de programme pour exécuter, lorsqu'il est exécuté par une unité de contrôle, le procédé selon l'une quelconque des revendications 1 à 12.
